# EUROPEAN PATENT SPECIFICATION

(11) **EP 4 306 398 B1**
(45) Date of publication and mention of the grant of the patent: **07.01.2026**
(21) Application number: 22209527.5
(22) Date of filing: 25.11.2022
(51) Int. Cl.: B62K 25/02, B60B 27/02, F16B 41/00

(54) **QUICK-RELEASE FOR BICYCLES**
SCHNELLENTRIEGELUNG FÜR FAHRRÄDER
DISPOSITIF DE BLOCAGE RAPIDE POUR BICYCLETTES

(30) Priority: 14.07.2022 TW 111126426
(43) Date of publication of application: 17.01.2024
(73) Proprietor: Liu, Wei-Ting, Taichung City (TW)
(72) Inventor: Liu, Wei-Ting, Taichung City (TW)
(74) Representative: Cabinet Chaillot

(56) References cited:
- US-A1- 2017 259 616
- US-A1- 2018 346 056
- US-A1- 2019 072 125
- US-A1- 2020 283 089
- US-B1- 9 963 190

## Description

### BACKGROUND OF THE INVENTION

### 1. Fields of the invention

The present invention relates to a quick-release, and more particularly, to a quick-release for bicycles, and the rod for the quick-lease is hidden in the rear wheel hub.

### 2. Descriptions of Related Art

There are some parts of bicycles require replacement or adjustment, such as the wheel hub relative to the axle, and the seat relative to the seat tube, the quick-release is used to achieve the purpose without using extra tools. The latest quick-release for bicycles includes an axle with a washer mounted thereto, and the axle extends through one of the two dropouts of the front fork so as to be threadedly connected to another one of the two dropouts. The washer is sandwiched between the head of the axle and the dropout.

A bicycle quick-release known to applicant is disclosed in Taiwanese Patent No. I728299, and includes a rod, an axle, an end cap, and a pin. The axle includes a passage defined axially therethrough. The end cap has a groove and a hole that extends radially through the groove which communicates with the passage. The rod includes a slot and the rod is located in the axle via the groove. The slot is located corresponding to the hole. The pin extends through the hole and pulls the rod from the axle. The rod contacts the periphery of the groove to rotate the axle to separate the wheel from the front fork.

That is to say, by using the quick-release, the wheel can be removed from the front fork without using any tool. However, the parts of the quick-release require complicated machining processes such as the slot of the rod and the groove of the end cap. A positioning mechanism is required to the rod and the head that is assembled to the rod. Therefore, the above mentioned quick-release is suffered by high manufacturing cost.

The present invention intends to provide a quick-release for bicycles to eliminate the shortcomings mentioned above.

US Patent No. US 2019/072125 discloses a fastener, for example for the fastening of a wheel shaft of a bicycle, as defined in the preamble of claim 1.

### SUMMARY OF THE INVENTION

The present invention relates to a quick-release and comprises an axle threadedly connected to a bicycle, and the axle has a head formed to the first end thereof, and an outer threaded end is formed to the second end of the axle. A passage is defined axially through the axle. A groove is formed radially through the head. Two recesses are respectively formed in two insides of the groove and located corresponding to the passage. An operation unit includes a knob, a rod and a ball, wherein the knob includes a first side and a second side. The first side of the knob is fitted in the groove of the head. The rod extends from the first side of the knob and the ball extends from the end of the rod opposite to the knob. A reception hole of the knob or the rod is connected to an engaging end of the rod or the ball, respectively, the reception hole having inner threads formed to an inner periphery thereof, the engaging end including outer threads which are threadedly connected to the inner threads of the reception hole. The diameter of the ball is smaller than the inner diameter of the passage so that the rod and the ball are movably located in the passage.

When the rod is pulled and the ball is rotatably engaged with the two recesses, the rod is pivoted and partially engaged with the groove to rotate the axle.

A non-circular hole is formed in the ball, wherein the non-circular hole is a polygonal hole or a hexagonal hole adapted to a tool used to be engaged with the non-circular hole so as to connect the engaging end to the reception hole.

The primary object of the present invention is to provide a quick-release wherein the rod is hidden in the axle of the bicycle. The rod is pulled to engage the ball with the recesses so as to quickly rotate the axle.

The present invention includes the following advantages which are that the rod is hidden in the axle, and the operation to rotate the axle by the operation unit is easy and convenient. The head of the axle has the groove and the rod has the ball formed thereto, so that when the rod is pulled, the ball is rotatably engaged with the two recesses in the groove, and the rod is able to be pivoted and engaged with the groove. By pivoting the rod, the axle is rotated so as to be quickly separate the wheel from the chain stay, or to secure the wheel to the chain stay.

The structure of the present invention is simple and the cost for manufacturing the quick-release is low. There is no tiny parts involved in the present invention, the assembly of the quick-release is quick and easy.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the quick-release of the present invention used with the chain stay;
Fig. 2 is a perspective view to show the quick-release of the present invention;
Fig. 3 is an exploded view of the quick-release of the present invention and the chain stay;
Fig. 4 is a cross sectional view of the quick-release of the present invention;
Fig. 5 is an enlarged view the circle 5 in Fig. 4;
Fig. 6 is a cross sectional view to show that the rod is pulled away from the chain stay;
Fig. 7 shows that the rod is pivoted and engaged with the groove of the head of the axle;
Fig. 8 shows that the rod is pivoted to rotate the axle, and
Fig. 9 is an exploded view of another embodiment of the quick-release of the present invention.

### DETAILED DESCRIPTION OF THE PREFERRED EMBODIMENT

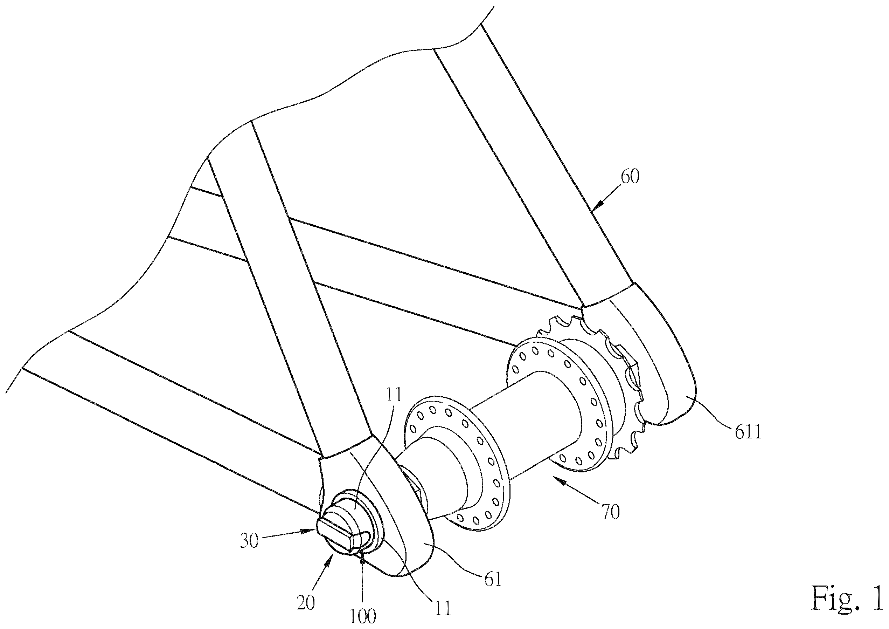

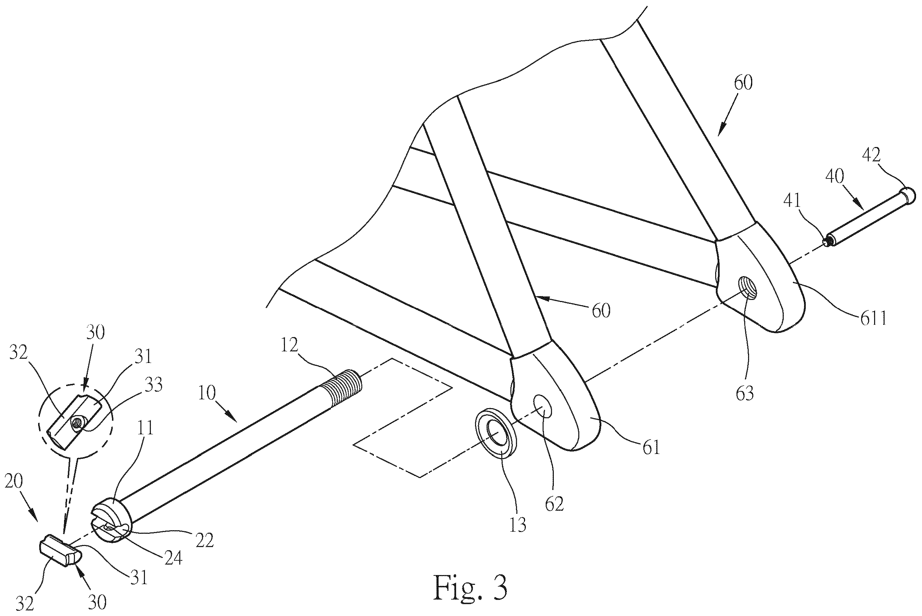

Referring to Figs. 1 to 3, the chain stay 60 includes two dropouts 61, 611, wherein the dropout 61 includes a through hole 62, and the other dropout 611 includes a threaded hole 63. A rear wheel assembly 70 including a hub is installed between the two dropouts 61, 611. The quick-release 100 of the present invention is used to secure the rear wheel assembly 70 between the chain stay 60.

The quick-release 100 of the present invention comprises an axle 10 and an operation unit 20. The axle 10 has a head 11 formed to the first end thereof, and an outer threaded end 12 is formed to the second end of the axle 10. The axle 10 extends through a washer 13 and the through hole 62, and is threadedly connected to the threaded hole 63 of the chain stay 60 of a bicycle by the outer threaded end 12. A passage 21 is defined axially through the axle 10. A groove 22 is formed radially through the head 11. Two recesses 24 are respectively formed in two insides of the groove 22 and located corresponding to the passage 21. The washer 13 is clamped between the head 11 of the axle 10 and the dropout 61.

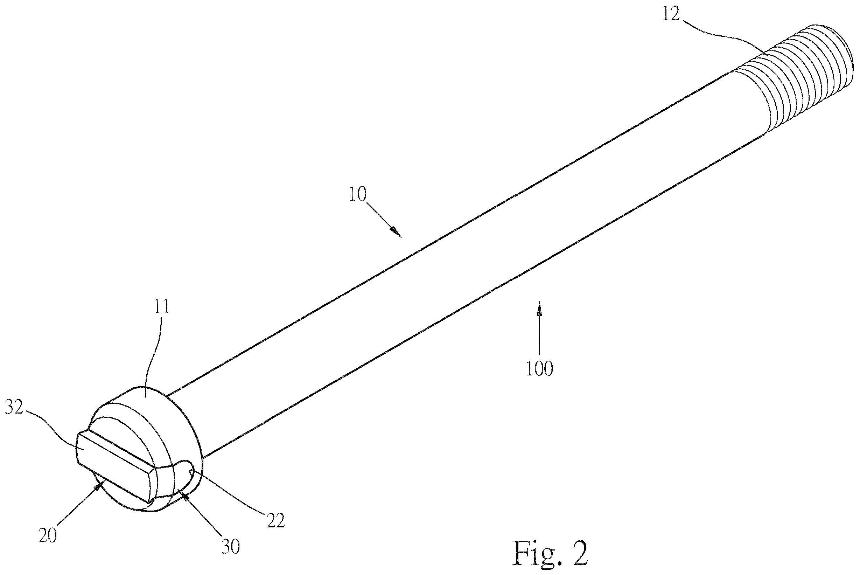

As shown in Figs. 2 to 4, the operation unit 20 includes a knob 30 and a rod 40. The knob 30 is an elongate knob and includes a first side 31 and a second side 32 which is located opposite to the first side 31. The first side 31 of the knob 30 is fitted in the groove 22 of the head 11. A reception hole 33 is formed to the inside 31 of the knob 30 and located between the two recesses 24 in the groove 22. The reception hole 33 has inner threads formed to an inner periphery thereof. The second side 32 of the knob 30 slightly protrudes beyond the groove 22. Two ends of the knob 30 are in flush with the outer periphery of the head 11.

The rod 40 is movably located in the passage 21, and has an engaging end 41 formed to the first end thereof. The engaging end 41 of the rod 40 includes outer threads which are threadedly connected to the inner threads of the reception hole 33 of the knob 30. A ball 42 is formed to the second end of the rod 40. The diameter of the ball 42 is smaller than the inner diameter of the passage 21 so that the rod 40 and the ball 42 are movable in the passage 21. According to the invention a non-circular hole 43 is formed in the ball 42, wherein the non-circular hole 43 can be a polygonal hole or a hexagonal hole. A tool may be used to be engaged with the non-circular hole 43 so as to connect the rod 40 to the knob 30.

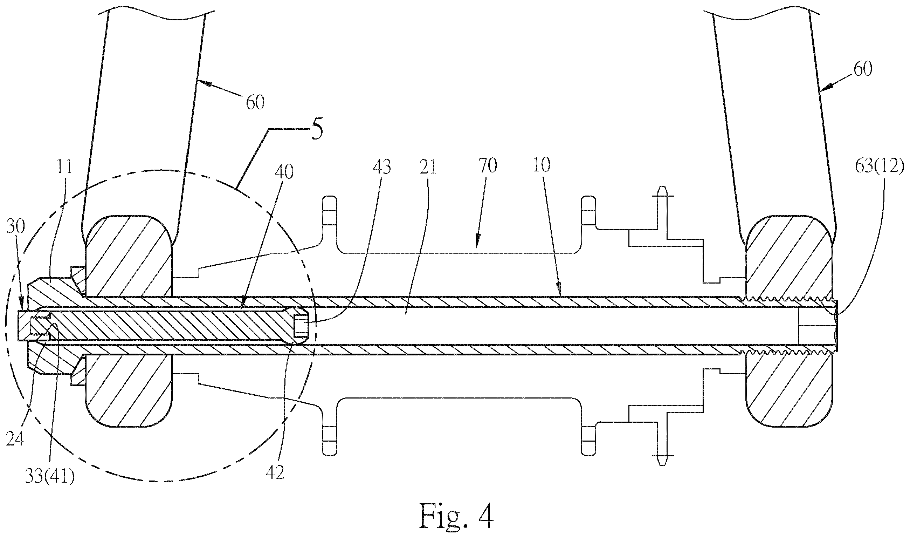

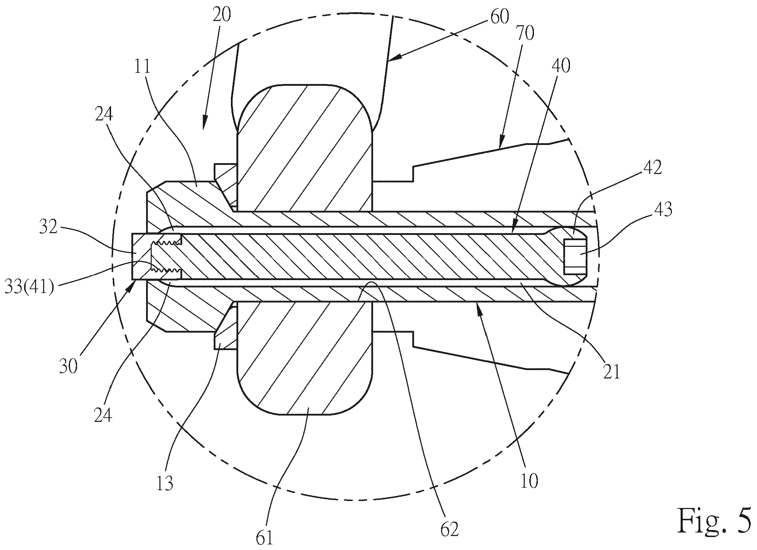

The axle 10 and the rear wheel assembly 70 are installed between the two dropouts 61, 611 of the chain stay 60. The outer threaded end 12 of the axle 10 is connected to the threaded hole 63 of the dropout 611. The engaging end 41 of the rod 40 is inserted into the passage 21 of the axle 10 from the outer threaded end 12 of the axle 10. The first side 31 of the knob 30 is engaged with the groove 22, and a tool is engaged with the non-circular hole 43 so as to connect the engaging end 41 of the rod 40 to the reception hole 33 of the knob 30 as shown in Figs. 4 and 5. Therefore, the rod 40 is connected to the knob 30, and the rod 40 is hidden in the axle 10. The second side 32 of the knob 30 slightly protrudes beyond the groove 22 as shown in Fig. 1.

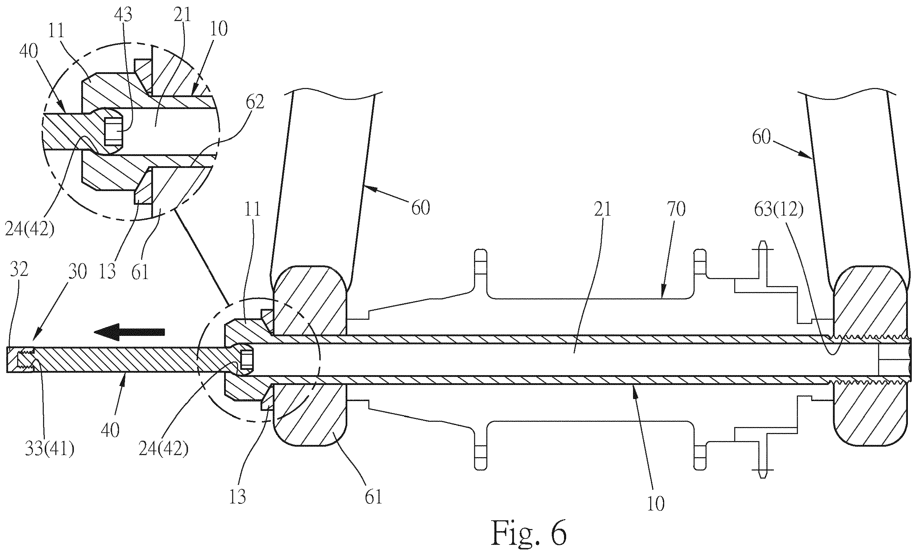

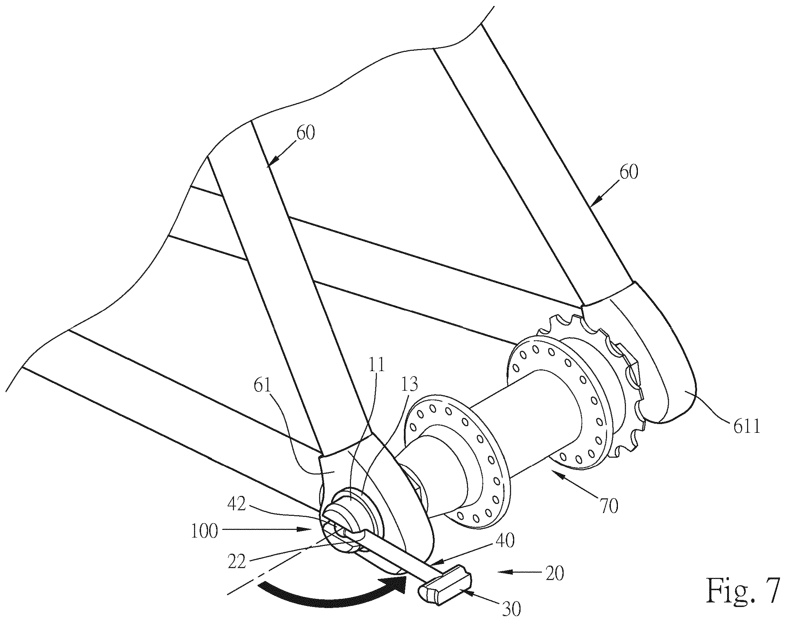

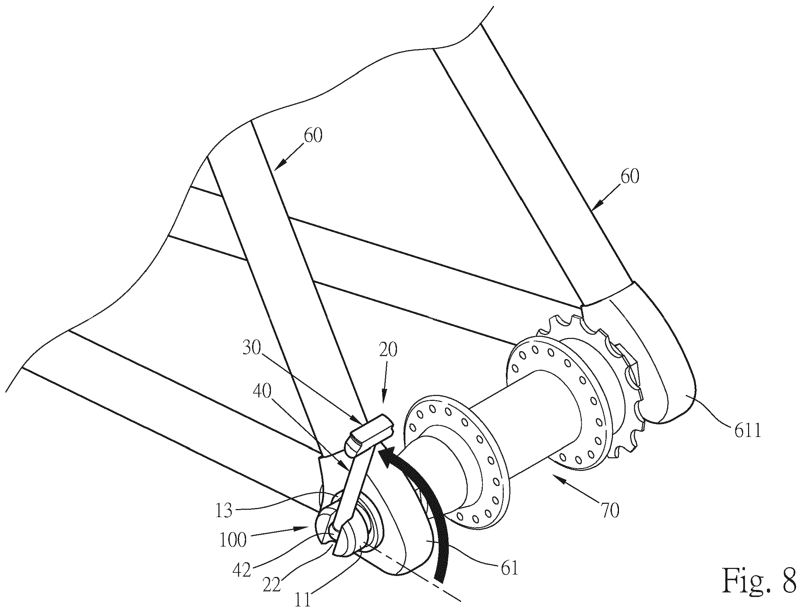

As shown in Figs. 6 to 8, when in use, the user holds the second side 32 of the knob 30 and pulls the knob 30 away from the head 11 of the axle 10, so that the rod 40 is pulled until the ball 42 is pivotably engaged with the recesses 24, and the rod 40 cannot be completely separated from the axle 10. The rod 40 is then pivoted about 90 degrees to engage the rod 40 with the groove 22. The rod 40 performs as an arm of force and applies a torque to the axle 10 when pivoting the rod 40, such that the axle 10 is rotated and the outer threaded end 12 is disengaged from the threaded hole 63 of the dropout 611. Therefore, the rear wheel assembly 70 can be removed from the chain stay 60.

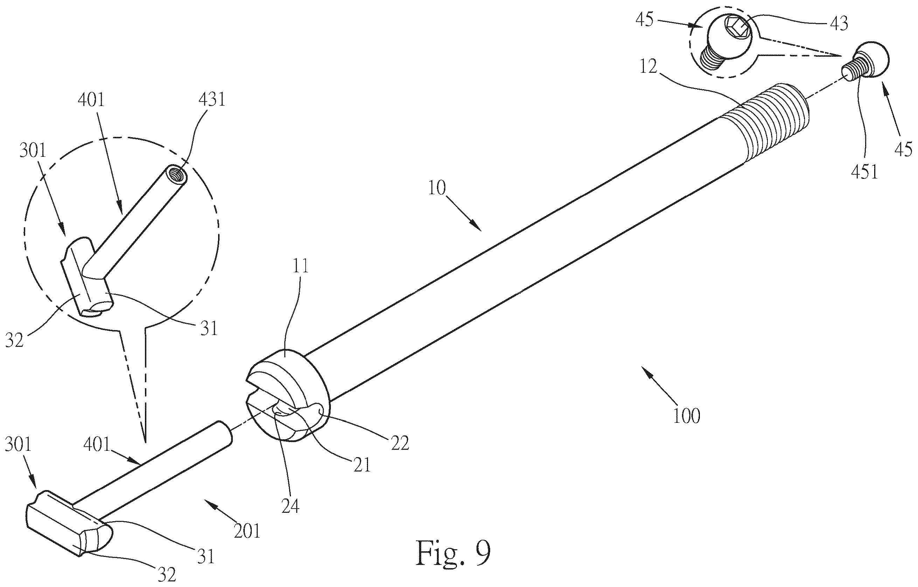

Fig. 9 shows the second embodiment of the quick-release 100 of the present invention comprises an axle 10 having a head 11 formed to the first end thereof, and an outer threaded end 12 is formed to the second end of the axle 10. The axle 10 is threadedly connected between the two dropouts 61, 611. A passage 21 is defined axially through the axle 10. A groove 22 is formed radially through the head 11. Two recesses 24 are respectively formed in two insides of the groove 22 and located corresponding to the passage 21.

An operation unit 201 includes a knob 301 and a ball 45. The knob 301 includes a first side 31 and a second side 32 which is located opposite to the first side 31. The first side 31 of the knob 301 is fitted in the groove 22 of the head 11. A rod 401 extends from the first side 31 of the knob 301 to form a T-bar. The rod 401 includes a reception hole 431 formed to the distal end thereof opposite to the knob 301. An engaging end 451 extends radially from the ball 45 and is connected to the reception hole 431. Specifically, the reception hole 431 has inner threads formed to the inner periphery thereof. The engaging end 451 of the ball 45 includes outer threads which are threadedly connected to the inner threads of the reception hole 431. A non-circular hole 43 is formed in the ball 45. The diameter of the ball 45 is smaller than the inner diameter of the passage 21 so that the rod 401 and the ball 45 are movable in the passage 21.

The rod 401 is inserted into the passage 21 of the axle 10 from the head 11 of the axle 10 until the first side 31 of the knob 301 is engaged with the groove 22. The ball 45 is put into the passage 21 from the threaded end 12 of the axle 10 and a tool (not shown) is engaged with the A non-circular hole 43 so as to threadedly connect the engaging end 451 to the reception hole 431 of the rod 401. When in use, the user holds the second side 32 of the knob 30 and pulls the knob 301 away from the head 11 of the axle 10, so that the rod 401 is pulled until the ball 45 is pivotably engaged with the recesses 24, and the rod 401 cannot be completely separated from the axle 10. The rod 401 is then pivoted about 90 degrees to engage the rod 401 with the groove 22. The rod 401 performs as an arm of force and applies a torque to the axle 10 when pivoting the rod 401, such that the axle 10 is rotated and the outer threaded end 12 is disengaged from the threaded hole 63 of the dropout 611. Therefore, the rear wheel assembly 70 can be removed from the chain stay 60.

While we have shown and described the embodiment in accordance with the present invention, it should be clear to those skilled in the art that further embodiments may be made without departing from the scope of the present invention.

## Claims

1. A quick-release (100) comprising:
an axle (10) having a head (11) formed to a first end thereof, an outer threaded end (12) formed to a second end of the axle (10), the axle (10) adapted to be threadedly connected to a bicycle, a passage (21) defined axially through the axle (10), a groove (22) formed radially through the head (11), two recesses (24) respectively formed in two insides of the groove (22) and located corresponding to the passage (21), and
an operation unit (20; 201) having a knob (30; 301), a rod (40; 401) and a ball (42; 45), the knob (30; 301) including a first side (31) and a second side (32) which is located opposite to the first side (31), the first side (31) of the knob (30; 301) being fitted in the groove (22) of the head (11), the rod (40; 401) extending from the first side (31) of the knob (30; 301) to form a T-Bar, and the ball (42; 45) formed to a second end of the rod (40; 401), a first reception hole (33) formed to the inside of of the knob (30) and located between the two recesses (24) in the groove, the rod (401) having an engaging end (41) formed to a first end thereof, and being engaged with the first reception hole (33) of the knob (30), **characterised by** the rod (40,401) including a second reception hole (431) formed to a distal end thereof opposite to the knob (30, 301), the first reception hole (33) having inner threads formed to an inner periphery thereof, the engaging end (41) including outer threads which are threadedly connected to the inner threads of the first reception hole (33), a diameter of the ball (42; 45) being smaller than an inner diameter of the passage (21) so that the rod (40; 401) and the ball (42; 45) are movably located in the passage (21), when the rod (40; 401) is pulled and the ball (42; 45) is rotatably engaged with the two recesses (24), the rod (40; 401) is pivoted and partially engaged with the groove (22) to rotate the axle (10);
a non-circular hole (43) is formed in the ball (42; 45), wherein the non-circular hole (43) is a polygonal hole or a hexagonal hole adapted to a tool used to be engaged with the non-circular hole (43) so as to connect the engaging end (41; 451) to the reception hole (33; 431).

2. The quick-release (100) as claimed in claim 1, wherein the second reception hole (431) has inner threads formed to an inner periphery thereof, and the engaging end (451) of the ball (45) includes outer threads which are threadedly connected to the inner threads of the second reception hole (431).

## Patentansprüche

1. - Schnellspanner (100), umfassend:
eine Achse (10), die einen Kopf (11) aufweist, der an einem ersten Ende der Achse gebildet ist, ein äußeres Gewindeende (12), das an einem zweiten Ende der Achse (10) gebildet ist, wobei die Achse (10) angepasst ist, um mit einem Fahrrad schraubverbunden zu werden, einen Durchgang (21), der axial durch die Achse (10) definiert ist, eine Nut (22), die radial durch den Kopf (11) gebildet ist, zwei Aussparungen (24), die jeweils in zwei Innenseiten der Nut (22) gebildet sind und sich entsprechend dem Durchgang (21) befinden, und
eine Betätigungseinheit (20; 201), die einen Knopf (30; 301), eine Stange (40; 401) und eine Kugel (42; 45) aufweist, wobei der Knopf (30; 301) eine erste Seite (31) und eine zweite Seite (32), die sich gegenüber der ersten Seite (31) befindet, beinhaltet, wobei die erste Seite (31) des Knopfs (30; 301) in die Nut (22) des Kopfs (11) eingesetzt ist, sich die Stange (40; 401) sich von der ersten Seite (31) des Knopfs (30; 301) erstreckt, um einen T-Stab zu bilden, und die Kugel (42; 45) an einem zweiten Ende der Stange (40; 401) gebildet ist, ein erstes Aufnahmeloch (33), das an der Innenseite des Knopfs (30) gebildet ist und sich zwischen den zwei Aussparungen (24) in der Nut befindet, wobei die Stange (401) ein Eingriffsende (41) aufweist, das an einem ersten Ende davon gebildet ist und mit dem ersten Aufnahmeloch (33) des Knopfs (30) eingegriffen ist,
**dadurch gekennzeichnet, dass** die Stange (40, 401) ein zweites Aufnahmeloch (431) aufweist, das an einem distalen Ende davon gegenüber dem Knopf (30, 301) gebildet ist, wobei das erste Aufnahmeloch (33) an einem inneren Umfang davon ein Innengewinde aufweist, wobei das Eingriffsende (41) ein Außengewinde beinhaltet, das mit dem Innengewinde des ersten Aufnahmelochs (33) schraubverbunden ist, wobei ein Durchmesser der Kugel (42; 45) kleiner ist als ein Innendurchmesser des Durchgangs (21), sodass die Stange (40; 401) und die Kugel (42; 45) bewegbar in dem Durchgang (21) angeordnet sind, wenn die Stange (40; 401) gezogen wird und die Kugel (42; 45) drehbar in die zwei Aussparungen (24) eingreift, wird die Stange (40; 401) geschwenkt und teilweise in die Nut (22) eingeführt, um die Achse (10) zu drehen;
in der Kugel (42; 45) ein nicht kreisförmiges Loch (43) gebildet ist, wobei das nicht kreisförmige Loch (43) ein polygonales Loch oder ein sechseckiges Loch ist, das an ein Werkzeug angepasst ist, das verwendet wird, um mit dem nicht kreisförmigen Loch (43) in Eingriff gebracht zu werden, um das Eingriffsende (41; 451) mit dem Aufnahmeloch (33; 431) zu verbinden.

2. - Schnellspanner (100) nach Anspruch 1, wobei das zweite Aufnahmeloch (431) ein Innengewinde aufweist, das an einem Innenumfang davon gebildet ist, und das Eingriffsende (451) der Kugel (45) ein Außengewinde beinhaltet, das mit dem Innengewinde des zweiten Aufnahmelochs (431) schraubverbunden ist.

## Revendications

1. - Dispositif de blocage rapide (100) comprenant :
un axe (10) ayant une tête (11) formée à une première extrémité de celui-ci, une extrémité filetée externe (12) formée à une seconde extrémité de l'axe (10), l'axe (10) étant apte à être relié par vissage à une bicyclette, un passage (21) défini axialement à travers l'axe (10), une rainure (22) formée radialement à travers la tête (11), deux évidements (24) respectivement formés dans deux intérieurs de la rainure (22) et situés en correspondance avec le passage (21), et
une unité de commande (20 ; 201) ayant un bouton (30 ; 301), une tige (40 ; 401) et une bille (42 ; 45), le bouton (30 ; 301) comprenant un premier côté (31) et un second côté (32) qui est situé à l'opposé du premier côté (31), le premier côté (31) du bouton (30 ; 301) étant monté dans la rainure (22) de la tête (11), la tige (40 ; 401) s'étendant à partir du premier côté (31) du bouton (30 ; 301) pour former une barre en T, et la bille (42 ; 45) étant formée à une seconde extrémité de la tige (40 ; 401), un premier trou de réception (33) étant formé à l'intérieur du bouton (30) et situé entre les deux évidements (24) dans la rainure, la tige (401) ayant une extrémité d'engagement (41) formée à une première extrémité de celle-ci, et étant engagée avec le premier trou de réception (33) du bouton (30), **caractérisé par le fait que** la tige (40, 401) comprend un second trou de réception (431) formé à son extrémité distale opposée au bouton (30, 301), le premier trou de réception (33) ayant des filets internes formés à sa périphérie interne, l'extrémité d'engagement (41) comprenant des filets externes qui sont reliés par vissage aux filets internes du premier trou de réception (33), un diamètre de la bille (42 ; 45) étant plus petit qu'un diamètre interne du passage (21) de telle sorte que la tige (40 ; 401) et la bille (42 ; 45) sont placées de manière mobile dans le passage (21), lorsque la tige (40 ; 401) est tirée et que la bille (42 ; 45) est engagée de manière rotative avec les deux évidements (24), la tige (40 ; 401) pivote et est partiellement engagée avec la rainure (22) afin de faire tourner l'axe (10) ;
un trou non circulaire (43) est formé dans la bille (42 ; 45), le trou non circulaire (43) étant un trou polygonal ou un trou hexagonal adapté à un outil utilisé pour être engagé avec le trou non circulaire (43) de manière à relier l'extrémité d'engagement (41 ; 451) au trou de réception (33 ; 431).

2. - Dispositif de blocage rapide (100) selon la revendication 1, dans laquelle le second trou de réception (431) a des filets internes formés sur sa périphérie interne, et l'extrémité d'engagement (451) de la bille (45) comprend des filets externes qui sont reliés par vissage aux filets internes du second trou de réception (431).
